# EUROPÄISCHE PATENTSCHRIFT

(11) **EP 0 705 531 B1**
(45) Veröffentlichungstag und Bekanntmachung des Hinweises auf die Patenterteilung: **04.06.1997**
(21) Anmeldenummer: 95114078.9
(22) Anmeldetag: 08.09.1995
(51) Int. Cl.: A01C 1/08, H01J 33/00

(54) **Einrichtung zur Elektronenbehandlung von Schüttgut, vorzugsweise von Saatgut**
Apparatus for electronic treatment of granules, specially seeds
Dispositif de traitement électronique de granulés, spécialement des semences

(30) Priorität: 29.09.1994 DE 4434767
(43) Veröffentlichungstag der Anmeldung: 10.04.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: Panzer, Siegfried, Dr., D-01279 Dresden (DE); Röder, Olaf, D-01326 Dresden (DE); Schiller, Siegfried, Prof.-Dr., D-01324 Dresden (DE); Seyfert, Ulf, Dr., D-01324 Dresden (DE)

(56) Entgegenhaltungen:
- DD-A- 291 705
- DE-A- 2 731 569
- US-A- 4 633 611

## Beschreibung

Die Erfindung betrifft eine Einrichtung zur Elektronenbehandlung von Schüttgut. Das bevorzugte Anwendungsgebiet ist die Behandlung von Saatgut, um samenbürtige Schaderreger, die an der Saatgutoberfläche haften bzw. deren Siedlungsbereich auf die Samenschalen begrenzt ist, abzutöten. Die Einrichtung ist auch dazu geeignet, um durch beschleunigte Elektronen Oberflächenmodifikationen mit begrenzten Tiefen an Schüttgütern durchzuführen.

In der Vergangenheit bis in die jüngste Zeit ist es üblich, das Saatgut mit geeigneten Chemikalien, wie beispielsweise Fungiziden zu behandeln, um samenbürtige Schaderreger zu vernichten. Diese Verfahren haben den Nachteil, daß die Wirkstoffe in der Regel toxisch sind und die fungizide Potenz der Beizmittel häufig nicht voll ausgeschöpft wird und die Gefahr der Überdosierung besteht. Das geschieht vor allem durch ungleichmäßige Anlagerung des Beizmittels am Samenkorn. Hinzu kommt, daß die Beizmittel eine Umweltbelastung darstellen. Durch Resistenzbildung besteht die Notwendigkeit, immer wieder neue Wirkstoffe zu entwickeln und anzuwenden.

Zur Vermeidung der Mängel, die durch den Einsatz von Chemikalien hervorgerufen werden, ist es bekannt, das Saatgut einer Behandlung mit beschleunigten Elektronen zu unterziehen, bei der an der Oberfläche und in der Samenschale siedelnde Krankheitserreger durch die biozide Wirkung beschleunigter Elektronen abgetötet werden. Die Energie der Elektronen und damit ihre Eindringtiefe in die Samenoberfläche wird dabei abhängig von der Morphologie der jeweiligen Fruchtart so gewählt, daß der empfindliche, von der Samenschale bedeckte Keim, von den Elektronen nicht erreicht und damit auch nicht geschädigt wird. Zu diesem Zweck wird das Saatgut durch eine evakuierte Prozeßkammer geführt und dort der Einwirkung der Elektronen ausgesetzt. Um eine allseitige Elektroneneinwirkung auf jedem Samenkorn zu erreichen, wird das Saatgut in einem transparenten Vorhang im freien Fall in der Behandlungszone den aus mehreren Raumrichtungen einwirkenden Elektronen ausgesetzt. Dazu werden eine oder mehrere Axial-Elektronenkanonen zur Erzeugung von Elektronenstrahlen genutzt, die über die Breite des Saatgutvorhanges gescannt werden (DD 291 704 A5; DD 291 705 A5; DD 291 677 A5).

Bei der Elektronenbehandlung von Massensaatgut, wie z. B. Getreidesaatgut, entsteht ein nachteiliger erheblicher Evakuierungsaufwand dadurch, daß das Saatgut bei der Führung durch die evakuierte Elektronenbehandlungsanlage einen Teil seines Wassergehaltes als Wasserdampf abgibt, der durch die Evakuierungseinrichtung auf relativ niedrigem Druckniveau mit abgepumpt werden muß. Die Evakuierungseinrichtung und die erforderlichen Saatgutschleusen bestimmen maßgeblich den apparativen Aufwand für die bekannten Elektronenbehandlungsanlagen für Saatgut. Ein weiterer Mangel der bekannten Technik ergibt sich daraus, daß das Saatgut unvermeidbar Staub abgibt, der sich z. T. in der Evakuierungseinrichtung absetzt und deren zyklische Reinigung erfordert. Die bekannten Einrichtungen zur Elektronenbehandlung von Saatgut sind deshalb relativ voluminöse Anlagen, die praktisch nur stationär betrieben werden können und die zu ihrem wirtschaftlichen Einsatz die Behandlung sehr großer Saatgutmengen erfordern.

Der Erfindung liegt die Aufgabe zugrunde, eine Einrichtung zur Behandlung von Schüttgut, vorzugsweise Saatgut, mit hohem Massendurchsatz zu schaffen. Die oberflächennahen Schichten des Gutes sollen mit hoher Gleichmäßigkeit der Flächendosis behandelt werden. Der im Schüttgut vorhandene Wassergehalt und unvermeidbare Staub, insbesondere beim Saatgut, soll das Verfahren nicht behindern. Die gesamte Einrichtung soll so aufgebaut sein, daß sie auch mobil ausführbar ist.

Erfindungsgemäß wird die Aufgabe nach den Merkmalen des Patentanspruches 1 gelöst. Weitere Ausgestaltungen sind in den Patentansprüchen 2 bis 12 beschrieben.

Im wesentlichen besteht die Einrichtung aus einer Prozeßkammer, mindestens einem Bandstrahler, der einen Elektronenstrahl erzeugt und Dosier- und Fördermitteln. Die Bandstrahler sind so ausgebildet und angeordnet, daß deren Emissionsbreite der Breite des Schüttgutstromes durch die Prozeßkammer entspicht. Das über die Öffnungen in der Prozeßkammer geführte Schüttgut gelangt im freien Fall und in einem transparenten Vorhang in den Behandlungsbereich. In der Ebene der Bandstrahler ist jedes einzelne Schüttgutteilchen der Einwirkung des von den Bandstrahlern erzeugten Elektronenvorhanges ausgesetzt. Die Elektronenstromdichte wird dabei so gewählt, daß nach Maßgabe der Fallgeschwindigkeit des Schüttgutes, insbesondere wenn es sich dabei um Saatgut handelt, die zur Bekämpfung der Schaderreger erforderliche letale Dosis übertragen wird. Die Beschleunigungsspannung für die Bandstrahler wird unter Berücksichtigung der im Strahlaustrittsfenster und der zwischen diesem und dem Schüttgutstrom befindlichen Gasstrecke erlittenen Energieverluste derart gewählt, daß die Eindringtiefe der Elektronen in das Schüttgut, d. h. Samenkorn, die Dicke der von der Morphologie des Samens abhängigen Samenschale nicht übersteigt und damit die Elektronen den Keim nicht erreichen.

Zur Verbesserung der Isotropie der Elektroneneinwirkung auf das Schüttgut kann es im Falle ungenügender Richtungsstreuung des Elektronenvorhanges durch das Strahlaustrittsfenster und die Gasstrecke bzw. das erzeugte Plasma zweckmäßig sein, Streukörper anzuordnen, die den aus den Bandstrahlern emittierten Elektronenvorhang teilweise oder vollständig erfassen und in mindestens zwei Teilvorhänge mit zur Fallrichtung des Schüttgutes unterschiedlicher Neigung aufspalten. Um den durch diese Elektronenstreuung entstehenden Energieverlust der Elektronen hinreichend klein zu halten, ist für den Streukörper, zumindest für dessen Oberfläche, ein Werkstoff hoher Dichte zu verwenden. Die Streukörper sind in ihrer Ausführung und Anordnung so ausgebildet, daß eine Verwischung der durch sie reflektierten Elektronenstrahlen erfolgt, um eine möglichst homogene Beaufschlagung aller Schüttgutteilchen zu erzielen.

Ferner ist es zweckmäßig, zwischen dem Schüttgutstrom und dem Elektronenaustrittsfenster aus dem Bandstrahler ein Gitter vorzusehen, das für die Elektronen durchlässig, für das Schüttgut aber undurchlässig ist.

Um die Bildung von nitrosen Gasen und Ozon im Behandlungsraum zu unterdrücken, ist es zweckmäßig, diesen mit einem Schutzgas zu füllen und durch eine ständige Schutzgaszufuhr die Sauerstoffkonzentration auf hinreichend kleinen Werten zu halten.

Die an die Ein- und Austrittsöffnungen der Prozeßkammer angeschlossenen Schüttgutführungen sind so ausgeführt, daß ein Austritt von Röntgenstrahlen vermieden wird. Die Prozeßkammer, die Bandstrahler und die Schüttgutführungen sind individuell oder integral mit bekannten Mitteln gegen den Austritt von Röntgenstrahlen geschützt.

Der Saatgutbehandlung mit Elektronen als einem physikalischen Verfahren zur phytosanitären Saatgutbehandlung kommt in sofern eine besondere Bedeutung zu, als dem Saatgut im Gegensatz zur chemischen Beizung keine toxischen Stoffe angelagert werden. Das elektronenbehandelte Saatgut ist im Wirkungsbereich der Behandlung sowohl frei von samenbürtigen Schaderregern als auch von toxischen Stoffen. Dies stellt eine hervorragende Ausgangsbedingung für die anschließende Anlagerung mikrobieller Systeme dar, die als Antagonisten das Saatgut im Boden über die Auflaufphase hinweg vor dem Befall bodenbürtiger Schaderreger schützen und /oder die als Phytoeffektoren das Pflanzenwachstum aktiv unterstützen.

Die Einrichtung ist zur Behandlung von beliebigen Schüttgütern mit Elektronenstrahlen verwendbar. Sie ist auch dort geeignet, wo dieses Schüttgut einen relativ hohen Feuchtigkeitsgehalt hat und mit Stäuben behaftet ist.

Werden in einer Einrichtung mehrere Bandstrahler angeordnet, die sich gegenüber stehen, so sind diese, damit sie sich gegenseitig thermisch nicht belasten, in der Höhe des Strahlungsfeldes versetzt anzuordnen.

Anhand von zwei Ausführungsbeispielen wird die Erfindung für den Anwendungsfall Saatgutbestrahlung näher beschrieben. In den zugehörigen Zeichnungen zeigen
- Fig. 1:: einen Querschnitt durch eine Einrichtung zur Elektronenbehandlung von Saatgut mit einer durch Strahlaustrittsfenster und Gasstrecke induzierten Elektronenstreuung,
- Fig. 2:: einen Querschnitt durch eine Einrichtung zur Elektronenbehandlung von Saatgut mit der Anordnung von Streukörpern zwischen Strahlaustrittsfenster und Saatgutstrom,
- Fig. 3:: einen Ausschnitt aus der Einrichtung nach Fig. 2 im Bereich der Streukörper,
- Fig. 4:: eine mobile Einrichtung auf einem LKW.

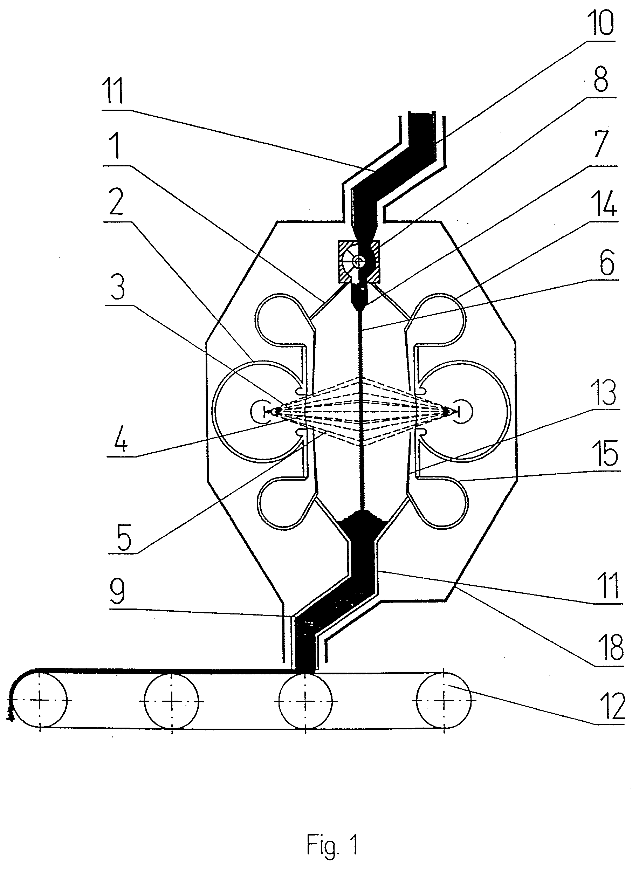

In Fig. 1 ist der prinzipielle Aufbau der Prozeßkammer dargestellt. Zu beiden Seiten der Prozeßkammer 1 sind sich gegenüberliegende Bandstrahler 2 angeordnet. Der durch die Bandstrahler 2 erzeugte Elektronenstrahl 3 durchdringt das Strahlaustrittsfenster 4 des Bandstrahlers 2 und wirkt atmosphärenseitig als diffuser Elektronenvorhang 5 allseitig auf das im freien Fall geförderte Saatgut 6 ein. Das Saatgut 6 fällt in einem breiten transparenten Vorhang, der durch einen Verteiler 7 mit einer Dosiereinrichtung 8 am Kopf der Prozeßkammer 1 geformt wird, durch die Behandlungszone und verläßt die Prozeßkammer 1 durch ein s-förmig gekrümmtes Rohr 9. Die Krümmung des Rohres 9 gewährleistet die Strahlendichtheit des Systems. Ein ebenfalls gekrümmtes Rohr 10 dient als Einlauf in die Prozeßkammer 1. Die Prozeßkammer 1 ist mit Luft oder einem Inertgas gefüllt. Die beiden Rohre 9 und 10 sind zur Abdichtung der Prozeßkammer 1 gegen den unkontrollierten Austritt von Gas mit einer Saatgutsäule 11 gefüllt. Die Rohre 9 und 10 haben einen der Breite des Saatgutstromes angepaßten rechteckigen Querschnitt. Eine nicht dargestellte Regeleinrichtung sorgt für das Entstehen der Saatgutsäule 11. Der stetige Abtransport des anfallenden Saatgutstromes wird durch eine Fördereinrichtung 12 ausgeführt. Das zur Kühlung des Strahlaustrittsfensters 4 dienende Kühlgas ist identisch mit dem Gas in der Prozeßkammer 1 und wird durch ein Düsensystem 13 mit einem Einlaß 14 und einem Auslaß 15 an dem Strahlaustrittsfenster 4 vorbeigeführt.

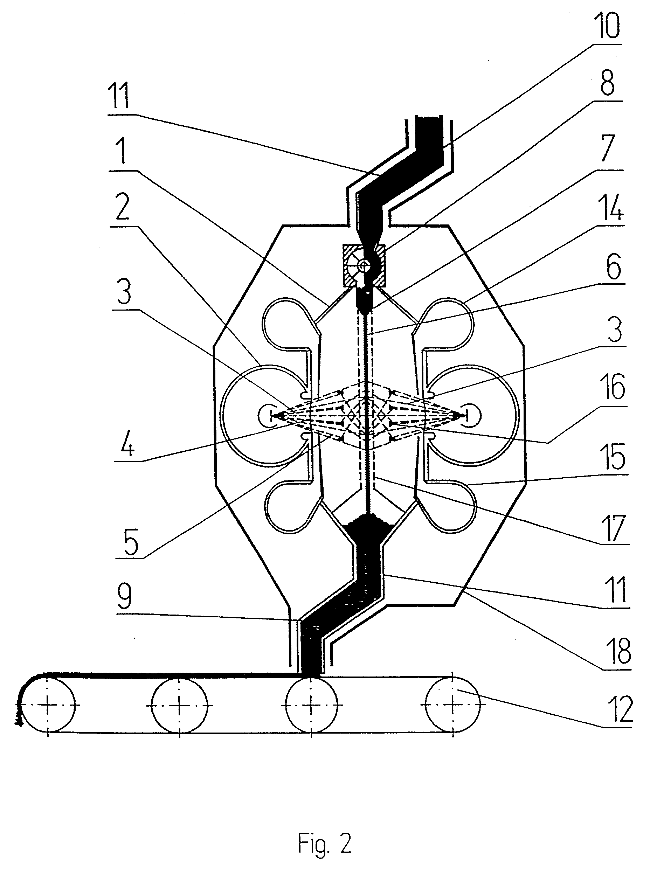

In der Einrichtung, die in Fig. 2 dargestellt ist, sind zu beiden Seiten des herabfallenden Saatgutes 6 übereinander mehrere Streukörper 16 im Bereich des Elektronenstrahls 3 angeordnet. Sie verlaufen horizontal und haben dreieckförmigen Querschnitt und dienen der Verbesserung der Isotropie der Elektroneneinwirkung auf das Saatgut 6. Desweiteren sind zur seitlichen Begrenzung des Saatgutstromes durch die Prozeßkammer 1 beiderseitig Gitter 17 angeordnet, welche transparent für die Elektronen, jedoch undurchlässig für das Saatgut 6 sind.

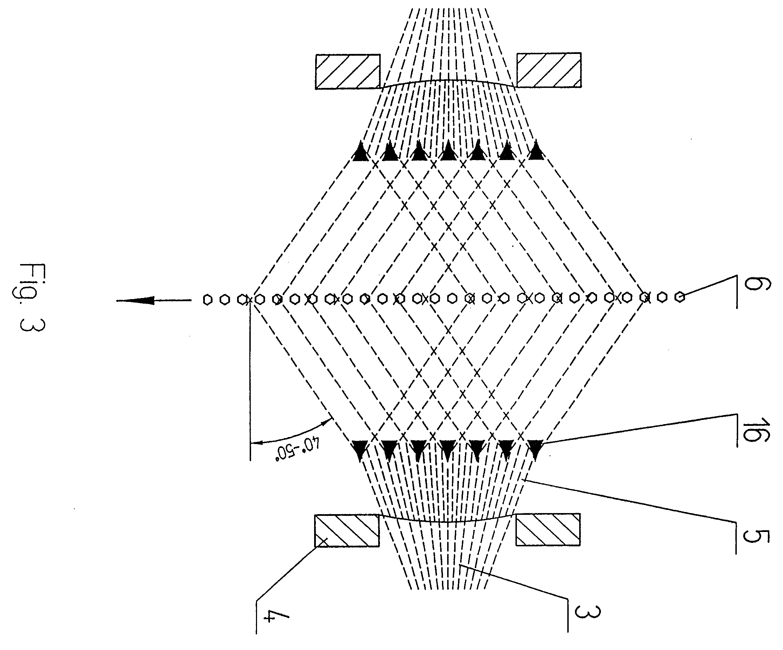

In Fig. 3 ist der Bereich, in dem der Behandlungsprozeß abläuft, vergrößert, jedoch nur im Prinzip dargestellt. Die aus dem Strahlaustrittsfenster 4 austretenden Elektronenstrahlen 3 treffen zum größten Teil auf die in bestimmter Weise geometrisch ausgebildeten Streukörper 16 und werden so reflektiert, daß sich aus dem anfangs diffusen Elektronenvorhang 5 zwei Teilvorhänge mit unterschiedlichem Richtungswinkel bilden. Das Saatgut 6 wird im Bereich des aufgeweiteten Teilvorhanges mehrmals von Elektronen beaufschlagt. Die so erreichte isotrope Elektronenstrahleinwirkung ermöglicht eine verbesserte Übertragung der erforderlichen Dosis auf dem gesamten Umfang eines jeden Saatgutkornes.

Die Prozeßkammer 1 mit den beiden Bandstrahlern 2 sowie die gesamte Einrichtung zur Saatgutabführung einschließlich Dosiereinrichtung 8 sind mit einer integralen Bleiblechabschirmung 18 gegen den Austritt von Röntgenstrahlung geschirmt.

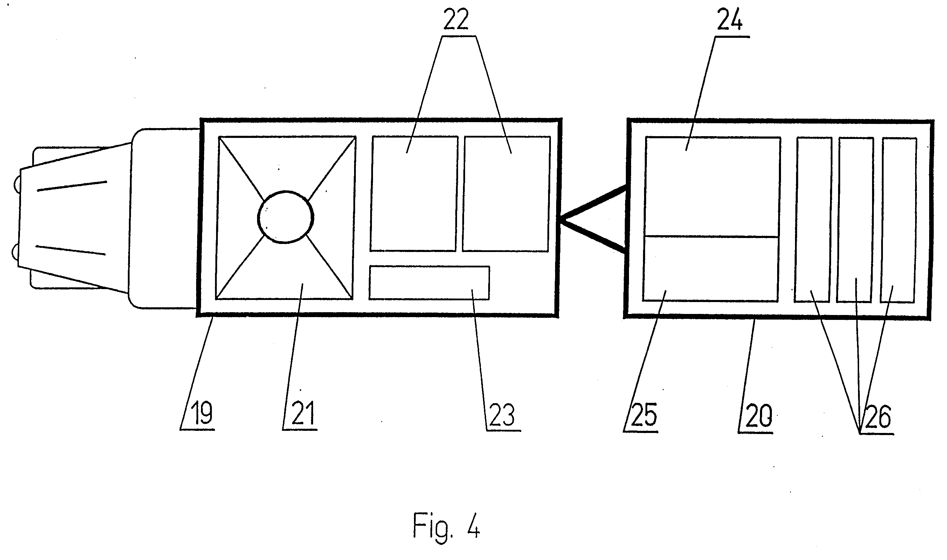

Um die gesamte Einrichtung örtlich unbegrenzt zum Einsatz zu bringen, ist in Fig. 4 eine mobile Ausführung derselben dargestellt. Die beschriebene Einrichtung ist geeignet, um sie auf einen üblichen LKW 19 mit einem Hänger 20 zu montieren. Die eigentliche Elektronenstrahlbehandlungsanlage 21 sowie die beiden Hochspannungsversorgungen 22 sind gemeinsam mit der Steuer- und Bedieneinheit 23 auf dem LKW 19 montiert. Auf dem Hänger 20 sind das Gebläse mit Rückkühlanlage 24, die Filtereinheit 25 zum Filtern des Gases sowie Steuer- und Regeleinrichtungen 26 für den Saatguttransport untergebracht.
Diese gesamte mobile Einheit kann zu beliebigen Saatgutbehandlungszentren verlegt werden. Am Einsatzort ist es notwendig, die einzelnen Aggregate elektrisch und mit Fördereinrichtungen zu verbinden. Nach dem Aufbau ist die gesamte Einrichtung binnen kurzer Zeit einsatzbereit.

## Patentansprüche

1. Einrichtung zur Elektronenbehandlung von Schüttgut, vorzugsweise von Saatgut, bestehend aus mindestens einem Elektronenstrahlerzeuger, dessen Elektronenstrahlen auf das im freien Fall durch eine Prozeßkammer geführte Schüttgut treffen, Dosier- und Fördermitteln und Mitteln zur Formung und Dosierung eines breiten transparenten Schüttgutstromes durch die Prozeßkammer (1), **dadurch gekennzeichnet**, daß mindestens auf einer Seite an einer etwa auf Atmosphärendruck befindlichen Prozeßkammer (1) mindestens ein Bandstrahler (2) zur Erzeugung der Elektronenstrahlen (3) und Führung durch ein Strahlaustrittsfenster (4) angeordnet ist, daß die Emissionsbreite der Bandstrahler (2) mindestens der Breite des Schüttgutstromes entspricht, daß der Einlauf und Auslauf des Schüttgutes den Austritt von Röntgenstrahlen verhindernd ausgeführt ist und daß im Bereich des Strahlaustrittsfensters (4) zur Kühlung desselben und Staubfernhaltung ein Düsensystem (13) angeordnet ist.

2. Einrichtung nach Anspruch 1, **dadurch gekennzeichnet**, daß der Bandstrahler (2) horizontal derart angeordnet ist, daß die mittlere Emissionsrichtung der aus dem Strahlaustrittsfenster (4) austretenden Elektronen zum Schüttgutstrom in der Prozeßkammer (1) rechtwinklig ist.

3. Einrichtung nach Anspruch 1 und 2, **dadurch gekennzeichnet**, daß zwischen dem Strahlaustrittsfenster (4) und dem Schüttgutstrom Streukörper (16) angeordnet sind, deren Oberflächennormale mit der mittleren Emissionsrichtung der Bandstrahler (2) einen Winkel von ca. 70° bilden.

4. Einrichtung nach Anspruch 3, **dadurch gekennzeichnet**, daß mindestens die Oberfläche der Streukörper (16) aus einem Werkstoff hoher Dichte, vorzugsweise Wolfram, besteht.

5. Einrichtung nach Anspruch 3 und 4, **dadurch gekennzeichnet**, daß die Oberflache der Streukörper (16) in ihrer Längsrichtung gewellt verlaufend ausgeführt ist.

6. Einrichtung nach Anspruch 3 bis 5, **dadurch gekennzeichnet**, daß die Streukörper (16) mit einer Schwingeinrichtung verbunden sind.

7. Einrichtung nach mindestens einem der Ansprüche 1 bis 6, **dadurch gekennzeichnet**, daß zu beiden Seiten des Schüttgutstromes ein Gitter (17) über dem gesamten Bereich des Schüttgutstromes angeordnet ist, welches für Elektronen transparent jedoch für das Schüttgut undurchlässig ausgeführt ist.

8. Einrichtung nach mindestens einem der Ansprüche 1 bis 7, **dadurch gekennzeichnet**, daß der Schüttgutstrom, zumindest im Einwirkungsbereich der Elektronen, von einer elektronendurchlässigen Folie umgeben ist.

9. Einrichtung nach mindestens einem der Ansprüche 1 bis 8, **dadurch gekennzeichnet**, daß im Bereich der Zu- und Abführung des Schüttgutes eine Regeleinrichtung zur Konstanthaltung der Füllstände in dem Ein- und Auslauf angeordnet ist.

10. Einrichtung nach mindestens einem der Ansprüche 1 bis 9, **dadurch gekennzeichnet**, daß die Prozeßkammer (1) einschließlich der Bandstrahler (2) und den Zu- und Abführungen für das Schüttgut von einer Abschirmung (18) gegen Röntgenstrahlen umgeben sind.

11. Einrichtung nach mindestens einem der Ansprüche 1 bis 10, **dadurch gekennzeichnet**, daß in Verbindung mit der Zu- und Abführung des Schüttgutes in diesem Bereich Düsen zur Erzeugung eines Gasstromes in Förderrichtung angeordnet sind.

12. Einrichtung nach mindestens einem der Ansprüche 3 bis 11, **dadurch gekennzeichnet**, daß in der Prozeßkammer (1) Düsen derart angeordnet sind, daß deren Gasstrom die Oberflächen der Streukörper (16) beaufschlagt.

## Claims

1. Apparatus for electron treatment of bulk material, chiefly seed material, consisting of at least one electron beam generator whose electron beams fall on the bulk material passing through a processing chamber in free fall, metering and conveyor means and means for forming and metering a wide, transparent bulk material stream through the processing chamber (1), characterized in that at least one strip radiator (2) for generating the electron beams (3) and passing them through a beam exit window (4) is disposed on one side of a processing chamber (1) approximately at atmospheric pressure, in that the emission width of the strip radiator (2) corresponds at least to the width of the bulk material stream, in the that the inlet and outlet for the bulk material are designed to prevent the escape of X-rays and in that a nozzle system (13) is arranged in the region of the beam exit window (4) for cooling the same and keeping dust away.

2. Apparatus according to claim 1, characterized in that the strip radiator (2) is horizontally so arranged that the mean direction of emission of the electrons emerging from the beam exit window (4) is at right angles to the bulk material stream in the processing chamber (1).

3. Apparatus according to claim 1 and 2, characterized in that scattering bodies (16) are arranged between the beam exit window (4) and the bulk material stream, with their surface normals making an angle of about 70° with the mean direction of emission of the strip radiator (2).

4. Apparatus according to claim 3, characterized in that at least the surface of the scattering bodies (16) consists of a material of high density, preferably tungsten.

5. Apparatus according to claim 3 and 4, characterized in that the surface of the scattering bodies (16) is corrugated, running in its longitudinal direction.

6. Apparatus according to claim 3 to 5, characterized in that the scattering bodies (16) are attached to a vibrating device.

7. Apparatus according to at least one of claims 1 to 6, characterized in that a screen (17) is arranged on both sides of the bulk material stream over the whole region of the bulk material stream and is transparent to the electrons but impermeable to the bulk material.

8. Apparatus according to at least one of claims 1 to 7, characterized in that the bulk material stream is surrounded with a film which is permeable to electrons at least in the region of action of the electrons.

9. Apparatus according to at least one of claims 1 to 8, characterized in that a regulating device is arranged in the region of in-feed and out-feed of the bulk material for maintaining the filling level in the inlet and outlet constant.

10. Apparatus according to at least one of claims 1 to 9. characterized in that the processing chamber (1), with the strip radiator (2) and the feed-in and feed-out for the bulk material, are surrounded by a shield (18) against X-rays.

11. Apparatus according to at least one of claims 1 to 10, characterized in that nozzles for creating a gas stream in the feed direction are arranged in conjunction with the in-feed and out-feed of the bulk material in this region.

12. Apparatus according to at least one of claims 3 to 11, characterized in that nozzles are so arranged in the processing chamber (1) that their gas stream affects the surfaces of the scattering bodies (16).

## Revendications

1. Installation de traitement électronique de produits en chute de préférence de semences composée d'au moins un générateur de faisceaux d'électrons dont les faisceaux d'électrons passent à travers le produit en vrac conduit en chute libre à travers une chambre de traitement, des moyens de dosage et de transfert et des moyens pour former et doser un faisceau de produits en vrac, transparent, large à travers la chambre de traitement (1),
caractérisée en ce qu'
au moins d'un côté dans une chambre de traitement (1) qui est sensiblement à la pression atmosphérique, il est prévu au moins un émetteur de faisceaux en bande (2) pour générer des faisceaux d'électrons (3) et les guider à travers une fenêtre de sortie de faisceaux (4),
- la largeur d'émission de l'émetteur en bande (2) correspond au moins à la largeur du flux de produits en vrac,
- l'entrée et la sortie du produit en vrac étant assurées pour éviter la sortie des rayons X et en ce qu'au niveau de la fenêtre de sortie du faisceau (4), le refroidissement de celle-ci et l'évacuation de la poussière sont assurés par un système de buses (13).

2. Installation selon la revendication 1,
caractérisée en ce que
l'émetteur de faisceaux en bande (2) est horizontal pour que la direction d'émission moyenne des électrons sortant de la fenêtre de sortie de faisceaux (4) soit perpendiculaire au flux de produits en vrac dans la chambre de traitement (1).

3. Installation selon les revendications 1 et 2,
caractérisée en ce qu'
entre la fenêtre de sortie de faisceaux (4) et le flux de produits en vrac, il y a des organes de dispersion (16) dont les normales aux surfaces forment avec la direction moyenne d'émission de l'émetteur de faisceaux en bande (2) un angle d'environ 70°.

4. Installation selon la revendication 3,
caractérisée en ce qu'
au moins la surface des organes de dispersion (16) est en un matériau de densité élevée de préférence en tungstène.

5. Installation selon les revendications 3 et 4,
caractérisée en ce que
la surface des organes de dispersion (16) est ondulée dans la direction longitudinale.

6. Installation selon les revendications 3 à 5,
caractérisée en ce que
les organes de dispersion (16) sont reliés à une installation de mise en vibration.

7. Installation selon au moins l'une des revendications 1 à 6,
caractérisée en ce que
des deux côtés du flux de produits en vrac, il est prévu une grille (17) s'étendant sur toute la zone du flux de produits en vrac qui est transparente aux électrons mais imperméable aux produits en vrac.

8. Installation selon au moins l'une des revendications 1 à 7,
caractérisée en ce que
le flux de produits en vrac est entouré d'une feuille perméable aux électrons au moins dans la zone d'action des électrons.

9. Installation selon au moins l'une des revendications 1 à 8,
caractérisée en ce qu'
au niveau de l'arrivée et de la sortie du produit en vrac, il est prévu une installation de régulation pour maintenir constant le niveau de remplissage de l'entrée et de la sortie.

10. Installation selon au moins l'une des revendications 1 à 9,
caractérisée en ce que
la chambre de traitement (1) y compris l'émetteur de faisceaux (2) et les alimentations et l'évacuation de produits en vrac sont entourés d'un écran protecteur (18) contre les rayons X.

11. Installation selon au moins l'une des revendications 1 à 10,
caractérisé en ce qu'
en combinaison avec l'alimentation et l'évacuation du produit en vrac dans cette zone il y a des buses générant un flux de gaz dans la direction de transfert.

12. Installation selon au moins l'une des revendications 3 à 11,
caractérisée en ce que
des buses sont prévues dans la chambre de traitement (1) pour que par leur flux de gaz elles sollicitent la surface des organes de dispersion (16).
